# FASCICULE DE BREVET EUROPEEN

(11) **EP 2 956 008 B1**
(45) Date de publication et mention de la délivrance du brevet: **18.12.2019**
(21) Numéro de dépôt: 14709991.5
(22) Date de dépôt: 07.02.2014
(51) Int. Cl.: A22C 13/00, A22C 11/02

(54) **MACHINE DE PRODUCTION DE SAUCISSES AVEC SON DISPOSITIF DE COAGULATION DU BOYAU ET LIGNE DE FABRICATION COMPRENANT LADITE MACHINE**
WURSTHERSTELLUNGSMASCHINE MIT EIGENEM HÜLLENKOAGULATIONSVORRICHTUNG UND DIESE MASCHINE UMFASSENDE PRODUKTIONSLINIE
MACHINE FOR THE PRODUCTION OF SAUSAGES WITH ITS CASING COAGULATION DEVICE AND PRODUCTION LINE COMPRISING SAID MACHINE

(30) Priorité: 15.02.2013 FR 1351337
(43) Date de publication de la demande: 23.12.2015
(73) Titulaire: Marel France, 56150 Baud (FR)
(72) Inventeur: LE PAIH, Jacques, 56930 Plumeliau (FR); PIERRE, Yohann, 56700 Kervignac (FR); LE PABIC, Fabrice, 56330 Camors (FR); SPIERTS, Léon, 6211 PD Maastricht (NL); HOEKSTRA-SUURS, Patricia, 6671 LB Zetten (NL); KOOLS, Johannes, 4731 HR Oudenbosch (NL); MEULENDIJKS, Johannes, 5754 GP Deurne (NL)
(74) Mandataire: Novagraaf Technologies
(86) Numéro de dépôt international: PCT/FR2014/050235
(87) Numéro de publication internationale: WO 2014/125194

(56) Documents cités:
- EP-A2- 2 869 705
- US-A- 5 989 609
- US-A- 6 153 234
- US-A1- 2008 317 915
- US-B1- 6 235 328

## Description

L'invention concerne une machine d'alimentation en un produit alimentaire d'un dispositif de mise en contact de ce produit alimentaire avec un produit de coagulation pour envelopper ledit produit d'un matériau durci formant peau appelée aussi enveloppe extérieure ou « boyau », que l'enveloppe soit en boyau naturel ou non.

Les produits alimentaires concernés sont en particulier les produits longs, flexibles et susceptibles de se courber naturellement. On définit de tels produits comme tout produit que par exemple une enveloppe extérieure peut amener, sous contrainte imposée par elle, à changer de forme.

L'invention concerne aussi une ligne de fabrication en continu de tels produits alimentaires.

Sont ainsi concernées les saucisses, boudins, et autres produits alimentaires en morceaux placés dans une enveloppe en boyau.

Un certain nombre de ces produits sont élaborés par co-extrusion qui est une forme particulière d'extrusion.

Le principe de la co-extrusion de produits alimentaires est décrit dans NL 6909339. Un revêtement d'un brin de pâte alimentaire est enrobé d'une couche de revêtement de collagène par co-extrusion. À la suite de l'extrusion le brin enrobé est guidé dans un bain de coagulation pour raidir l'enveloppe extérieure.

Sous l'influence de la solution de coagulation, le collagène coagule et/ou précipite. Un brin de pâte alimentaire est ainsi au moins partiellement revêtu avec une enveloppe extérieure solide de collagène appelée « casing ».

Le document D1 (US 6 153 234 A) décrit une machine pour l'extrusion de saucisses permettant la coagulation de la surface externe des saucisses.

En plus des protéines telles que le collagène, on utilise souvent également, dans l'industrie alimentaire, des polysaccharides, tels que l'alginate, comme agent de revêtement pour aliments tels que, par exemple, les saucisses. Le terme alginate se réfère à un groupe de polysaccharides naturels extraits d'algues. En présence de métaux alcalino-terreux (tels que des alginates de magnésium, les alginates et de calcium) peuvent former des gels relativement facilement. Le collagène et l'alginate peuvent également être utilisés en combinaison, comme décrit dans WO 2006/135238 A2.

Des études ont montré que la gélification des alginates sous l'influence, par exemple, de calcium se fait en raison de l'élaboration d'une structure tridimensionnelle (cf. le modèle de boîte à œufs). Lorsque l'alginate se transforme en cette structure tridimensionnelle, un gel relativement solide est créé. Un tel gel est particulièrement adapté pour servir d'enveloppe extérieure par exemple de saucisses.

Dans la co-extrusion l'enveloppe extérieure est souvent extrudée sur un aliment en forme de boudin de pâte utilisée dans la fabrication des saucisses. Le guidage dans un bain de sel contenant du calcium du brin extrudé et revêtu assure la prise de la couche de revêtement qui se solidifie en quelque sorte. En raison de la présence de calcium, l'agent de revêtement, par exemple l'alginate, se gélifie rapidement.

L'aliment extrudé peut en outre être renforcé par apport ensuite de calcium sur le produit alimentaire.

Un inconvénient est cependant que la résistance/solidité initiale du gel d'alginate s'affaiblie au cours du temps, par exemple sous 24 heures, en raison de chélates de métaux (par exemple, phosphates) présents dans la pâte d'aliments dissolvant l'ion divalent, par exemple du calcium, lié à l'agent gélifiant. L'élimination des ions divalents du gel entraîne un gonflement et une altération de l'agent gélifiant. Dans le pire des cas, le gel disparaît complètement et, par conséquent, la nourriture n'est plus stable et tombe en morceaux.

Un inconvénient supplémentaire du gel d'alginate est que le gel en tant que tel n'adhère pas réellement à la pâte alimentaire. En conséquence, les caractéristiques de cuisson d'un produit alimentaire co-extrudé, par exemple une saucisse, sont telles que, pendant la cuisson, le gel ne rétrécit pas avec la pâte alimentaire et la chaleur de cuisson n'est pas diffusée par la nourriture. Il en résulte une accumulation de chaleur dans la couche de gel, ce qui provoque une déformation indésirable et une décoloration du revêtement en raison de l'évaporation de l'humidité dans le revêtement. En outre, des bulles d'air peuvent se former entre la pâte alimentaire et l'enveloppe en cours de cuisson, ce qui conduit à un produit moins attractif et/ou une cuisson insuffisante, au moins localement.

Compte tenu de ce qui précède, il est apparu nécessaire de stabiliser et d'augmenter la force (résistance/solidité) du gel d'alginate appliqué sur la pâte alimentaire pour améliorer la durée de stockage.

L'augmentation du nombre d'ions divalents, par exemple de calcium, de strontium, de baryum ou des combinaisons de ceux-ci, a été prévue dans l'art antérieur. Cependant, un plus grand nombre d'ions divalents entraîne des variations de goût, par exemple un goût amer, possiblement une consommation de sel relativement élevée et une corrosion de l'équipement.

En outre, il est nécessaire d'augmenter l'adhérence entre l'agent gélifiant et la pâte alimentaire ainsi que les caractéristiques de cuisson du produit.

Dans ces conditions, il est ici proposé de préparer un produit alimentaire notamment sous forme de pâte en brin allongé, via des moyens de traitement de morceaux d'aliments avec un agent gélifiant, comprenant les étapes de traitement suivantes:
a) la fourniture de morceaux d'aliments,
b) la fourniture d'un agent gélifiant,
c) le traitement de l'agent gélifiant avec une solution tampon acide, et
d) la mise en contact des morceaux alimentaires avec l'agent gélifiant.

Plus précisément, la machine proposée, qui permet de mettre en œuvre ce procédé, se caractérise par les caractéristiques techniques de la revendication 1, et notamment en ce qu'elle comprend :
- une première alimentation en agent gélifiant reliée à une source d'agent gélifiant,
- une deuxième alimentation en solution tampon acide reliée à une source de solution tampon acide,
- une troisième alimentation en denrée alimentaire reliée à une source de denrée alimentaire,
- un mélangeur comprenant :
   * une première entrée raccordée à la première alimentation en agent gélifiant,
   * une seconde entrée raccordée à la deuxième alimentation en solution tampon acide
   * et une sortie d'agent gélifiant et de solution tampon acide mélangés,
- une co-extrudeuse (ou tête de co-extrusion) dont une première entrée est raccordée à la troisième alimentation en denrée alimentaire et une seconde entrée est raccordée à la sortie d'agent gélifiant et de solution tampon acide mélangés, pour extruder au centre la denrée alimentaire et en périphérie le mélange d'agent gélifiant et de solution tampon acide, de façon à obtenir en sortie de la co-extrudeuse le produit alimentaire attendu.

Ceci permet la fabrication de produits alimentaires stables dans le temps. De plus, en raison de l'acidité de la solution tampon, l'agent gélifiant va adhérer à la denrée alimentaire (tel de la viande) par l'intermédiaire d'une liaison hydrogène intermoléculaire. Les produits alimentaires fabriqués à partir de cette solution présenteront une bonne texture globale et, avec la co-extrusion, une structure réseau bien construite de la couche de revêtement et une bonne adhérence de l'enveloppe extérieure avec la pâte alimentaire.

Dans un cas d'utilisation favorable, la troisième alimentation en denrée alimentaire alimentera la première entrée de la co-extrudeuse avec des morceaux de denrée alimentaire broyée, ce qui favorisera une co-extrusion performante avec un enrobage homogène par mélange précité.

Par ailleurs, notamment pour une qualité optimisée, on conseille :
- que la source d'agent gélifiant comprenne des polysaccharides et/ou au moins une protéine,
- et/ou que la source de solution tampon acide ait un pH d'environ 3.0 à 6.0,
- et/ou que la source de solution tampon acide ait une concentration totale en agents tampon d'environ 50 à 500mM,
- et/ou que la source de solution tampon acide soit formulée en un gel ou une pâte comprenant un agent épaississant.

Les explications qui suivent éclairent ces points et d'autres :
Dans un mode de réalisation préféré, l'agent gélifiant choisi sera un alginate, par exemple l'alginate de sodium. De préférence, l'agent gélifiant sera dans la plage d'environ 1.0 à 8.0% en poids d'alginate. En plus de l'alginate, l'agent de revêtement pourra également comprendre des hydrocolloïdes et des protéines telles que le collagène ou des protéines de lait.

Une coagulation relativement uniforme des protéines utilisées dans l'agent gélifiant peut par exemple se réaliser en utilisant des enzymes. Les enzymes préférés sont choisis parmi les transglutaminase, lactase, bilirubine oxydase, acide ascorbique oxydase et céruloplasmine.

Les particules ou morceaux d'aliments utilisés peuvent être des morceaux de légumes, de viande, de filet de poisson, etc., et/ou peuvent se présenter sous la forme de pâte alimentaire. La pâte alimentaire peut être fabriquée à partir de produits d'origine animale et/ou végétale, tels de la viande, du poisson, de la volaille, des légumes, des protéines de soja, des protéines de lait, des protéines ou des œufs de poule.

L'agent gélifiant est adapté à une co-extrusion aboutissant à la réalisation de l'enveloppe extérieure.

L'agent gélifiant peut être mélangé à la nourriture en pâte. L'agent gélifiant comprend de préférence des polysaccharides, des protéines ou leurs combinaisons. Les polysaccharides, ici préférentiel sont l'agar, la gellane, la carraghénine, des alginates, la cellulose, la pectine, la gomme xanthane et/ou de caroube, une farine de graines ou des dérivés de ceux-ci. Il est également possible d'utiliser une combinaison de ces composants ou d'autres polysaccharides. Il est également possible d'utiliser des protéines de l'agent gélifiant, si nécessaire en combinaison avec des polysaccharides. En particulier les protéines appropriées à cet effet sont le collagène, des protéines du lait ou des dérivés de ceux-ci. Il est cependant également possible d'utiliser des combinaisons de collagène et de protéines de lait. Il est de plus également possible d'utiliser un agent gélifiant comprenant des protéines, tels que le collagène ainsi que des polysaccharides, tels que l'alginate.

La solution tampon acide telle qu'on se propose ici de l'utiliser évitera de préférence des différences ioniques de force entre la pâte alimentaire et l'agent gélifiant. On conseille aussi que la solution tampon acide présente un pH dans la plage d'environ 3.0 à 6.0. De préférence, le pH est dans la plage d'environ 3.1 et 4.5, mieux encore le pH de la solution tampon acide sera compris entre environ 3.2 et 4.0 et encore mieux, le pH du tampon acide solution sera entre environ 3.3 et 3.6.

Le terme "environ" tel qu'utilisé dans la présente description est destiné à inclure des valeurs, en particulier à moins de 10% des valeurs indiquées, mieux encore moins de 5% des valeurs indiquées.

La solution tampon acide peut être constituée de plusieurs agents tampons appropriés. Dans un mode de réalisation, la concentration totale d'agents tampons présents dans cette solution tampon acide sera dans la plage d'environ 50 à 500 mM, car une concentration des agents tampons trop basse fournira un tamponnage incertain qui risque de dériver, tandis qu'une concentration d'agents de tamponnage trop élevée affecte négativement les propriétés désirées du produit alimentaire, comme le goût. De préférence, la concentration d'agents tampon (ou « buffering agents ») est dans la plage d'environ 100 à 400 mM. Il est même préférable que la concentration d'agents tampon soit dans la plage d'environ 200 à 300 mM. Et il est même préféré que la solution tampon acide comprenne des tampons présents dans une concentration totale d'environ 250 M pour fournir un bon équilibre entre le goût du produit alimentaire et la force du tampon.

Dans un autre mode de réalisation préféré, les agents tampons seront choisis parmi les citrates et l'acide citrique. De préférence, le citrate sera ajouté à la solution sous la forme d'un sel, par exemple citrate de sodium, citrate de calcium ou des combinaisons de ceux-ci. De préférence, le citrate de calcium sera utilisé car le calcium a un effet positif sur la résistance du gélifiant. Notamment au cas où du citrate de calcium est utilisé, des étapes supplémentaires de renforcement peuvent être évitées.

Dans un mode de réalisation préféré, le brin de produit alimentaire revêtu par, et/ou en mélange avec, l'agent gélifiant retenu sera ensuite soumis à au moins une étape de renforcement e), au cours de laquelle l'agent gélifiant visqueux sera utilisé avec un agent de renforcement liquide. Le brin peut être utilisé en pulvérisant l'agent de renforcement liquide sur le produit alimentaire ou en faisant passer le brin dans un bain contenant l'agent de renforcement liquide. De préférence, l'agent de renforcement sera ajouté au liquide de l'agent gélifiant visqueux pendant ou après que l'agent gélifiant est mis en contact avec les morceaux de nourriture, tels des particules/morceaux de viande. Il est préféré que l'agent de renforcement soit ajouté au liquide visqueux de l'agent gélifiant après que l'agent gélifiant aura été mis en contact avec les morceaux de nourriture.

L'agent liquide de renforcement utilisé peut comprendre des solutions salines. Plus spécifiquement, la solution saline peut comprendre du sel de sodium, du sel de potassium, du sel de calcium, du sel de magnésium et/ou des combinaisons de ceux-ci. De sels spécifiques qui pourraient être utilisés sont entre autres le chlorure de sodium, le chlorure de potassium, le phosphate dipotassique, le calcium chlorure, lactate de calcium acétate de calcium, ou de phosphate de calcium. Ces sels sont recommandés car ils sont déjà beaucoup utilisés dans les produits alimentaires et parce qu'ils ont un effet positif sur la résistance et d'autres propriétés de l'enveloppe extérieure. En particulier des sels de calcium, tels que le chlorure de calcium, lactate de calcium, acétate de calcium, le calcium phosphate ou des combinaisons de ceux-ci, ont une grande influence sur la résistance de l'agent gélifiant, en particulier lorsque l'agent gélifiant comprend des polysaccharides, tels que l'alginate.

Dans un autre mode de réalisation, l'agent de renforcement liquide comprendra une solution de sel dans laquelle la concentration de sels de calcium sera dans la gamme d'environ 0.001 à 15% en poids, de préférence dans la gamme d'environ 0.01 à 10% en poids. Des propriétés particulièrement bonnes seront obtenues lorsque l'agent de renforcement liquide comprendra une solution saline comprenant des sels de sodium ou de potassium, en plus du calcium. Le sel de sodium, ou de potassium ou la concentration du sel de potassium de la solution de sel sera de préférence d'au moins environ 0.01% en poids. La concentration de sodium et/ou potassium dans l'agent de renforcement pourra sensiblement correspondre à la concentration de sodium et/ou potassium dans de la pâte alimentaire. Le transport de sodium et/ou potassium de l'agent gélifiant à la pâte alimentaire, ou vice-versa, sera, de cette façon, évité.

Pour assurer en continu une émulsion stable de deux composants plutôt liquides non miscibles, ou si des particules incorporées sous forme de suspensions doivent être désagglomérées et dispersées dans une phase visqueuse, on recommande que, sur la machine d'alimentation précitée, le mélangeur (agent gélifiant/solution tampon acide) comprenne un mélangeur dynamique.

Pour s'assurer des proportions optimisées entre la denrée alimentaire et le mélange entre l'agent gélifiant et la solution tampon acide, on conseille que soit prévue une pompe doseuse, de préférence une pompe à lobes, située entre le mélangeur et la co-extrudeuse et qui dosera donc la proportion entre la denrée alimentaire et le mélange d'agent gélifiant et de solution tampon acide sortant du mélangeur.

On recommande par ailleurs la présence d'un autre (deuxième) mélangeur, qui sera favorablement un mélangeur statique, interposé entre la première pompe doseuse et la co-extrudeuse, pour conforter le mélange entre l'agent gélifiant et la solution tampon acide.

Pour favoriser, lors de la co-extrusion, la répartition des composants entre le centre et la périphérie, il est par ailleurs conseillé qu'un broyeur soit disposé entre la troisième alimentation en denrée alimentaire et la première entrée de la co-extrudeuse.

Pour par ailleurs réguler, ou doser, la proportion entre l'agent gélifiant et la solution tampon acide, on recommande la présence d'une deuxième pompe doseuse en amont du mélangeur, de préférence une pompe à queue de cochon.

Dans un mode de réalisation particulier, la machine d'alimentation ici concernée comprendra en outre des moyens de mesure pour la mesure automatique des propriétés électriques et/ou de la résistance mécanique des particules alimentaires et/ou de l'agent gélifiant. Les différences de résistance ionique de la pâte alimentaire et de l'agent gélifiant mesurées par les moyens de mesure pourront être analysées par une unité de commande intelligente, par exemple un ordinateur exécutant le logiciel approprié. Afin de réduire les différences de résistance ionique de la pâte alimentaire et de l'agent gélifiant et/ou pour améliorer la stabilité de l'agent gélifiant, la résistance ionique de la solution tampon acide pourra ensuite être automatiquement adaptée par l'unité de commande intelligente et l'agent gélifiant sera ensuite mélangé avec une solution tampon acide automatiquement adaptée.

Dans une variante de réalisation, la machine d'alimentation comprendra une unité de commande intelligente pour le réglage automatique de la concentration ionique de la solution tampon acide. Au cas où la différence dans la force ionique de la pâte alimentaire et les changements de l'agent gélifiant changeront au cours du processus de co-extrusion, Cela offrira la possibilité d'adapter la force ionique de la solution tampon acide en conséquence, afin d'éviter que les différences ioniques se produisent dans le processus d'extrusion.

Ainsi, on recommande que la machine d'alimentation en cause comprenne:
- une unité de contrôle intelligente pour ajuster de façon automatisée la résistance ionique de la solution tampon acide,
- et/ou des moyens de mesure pour mesurer de façon automatisée les viscosités de l'agent gélifiant et de la solution tampon acide.

Outre une machine d'alimentation en produit alimentaire, de préférence donc sous forme de brin ou boudin longitudinalement continu, enrobé par une enveloppe extérieure gélifiée et/ou coagulée, est aussi ici concernée une ligne de fabrication en continu de tels produits alimentaires longs, flexibles et susceptibles de se courber naturellement selon la revendication 16, cette ligne comprenant :
- ladite machine d'alimentation ayant tout ou partie des caractéristiques ici énoncées,
- le, ou un, dispositif de mise en contact avec une solution de coagulation du produit alimentaire issu de cette machine, pour obtenir un produit alimentaire pourvu donc d'une enveloppe gélifiée et/ou coagulée formant peau, et
- un dispositif de mise en portions longitudinales du produit alimentaire pourvu de cette enveloppe.

Il est recommandé de mettre ainsi en portions, et donc de diviser le brin, en parties distinctes après l'étape (d) ou (e) précitée.

Ceci peut être réalisé avec, par exemple, un couteau, qui traverse le brin à des intervalles déterminés et réglables.

Des parties de brins séparées, tels que des saucisses, pourront être ainsi obtenues.

On a indiqué ci-avant qu'en raison de l'utilisation d'une solution tampon acide, l'agent gélifiant visqueux traité adhérera à la pâte alimentaire (co)extrudée, une fois mise en contact avec une solution de coagulation. Par conséquent, dans le cas où le brin d'aliment ainsi formé sera divisé en parties séparées, l'adhérence entre l'agent gélifiant visqueux et le produit alimentaire (tel la viande en morceaux) située au centre du brin permettra notamment d'obtenir une saucisse dont l'agent gélifiant visqueux couvrira complètement les extrémités longitudinales (extrémités non ouvertes), ceci étant un gage de qualité (produit final, tels des saucisses, mieux fini(es)) et de préservation dans le temps.

Si, suite à la co-extrusion du brin de pâte alimentaire avec son enveloppe de revêtement gélifiée et/ou coagulée, c'est-à-dire si, juste après l'étape (d) du procédé, le brin est divisé en plusieurs parties, cette division en parties séparées sera de préférence réalisée en utilisant au moins un couteau. Après le brin divisé en parties séparées, celles-ci seront favorablement soumises à au moins une étape de renforcement et/ou une étape de stabilisation.

Dans ce qui suit est présenté un exemple privilégié de réalisation, en référence à des dessins d'accompagnement fournis à titre d'exemple non limitatifs où :
- la figure 1 montre un synoptique de procédé de fabrication de saucisses de viande,
- les figures 2, 3, 4 sont de vues d'une machine et d'une ligne de fabrication conforme à la solution ici décrite,
- la figure 5 est une vue en coupe selon la section V-V,
- et les figures 6 et 7 sont des vues d'une machine et d'une ligne de fabrication selon une variante de réalisation de la solution ici décrite.

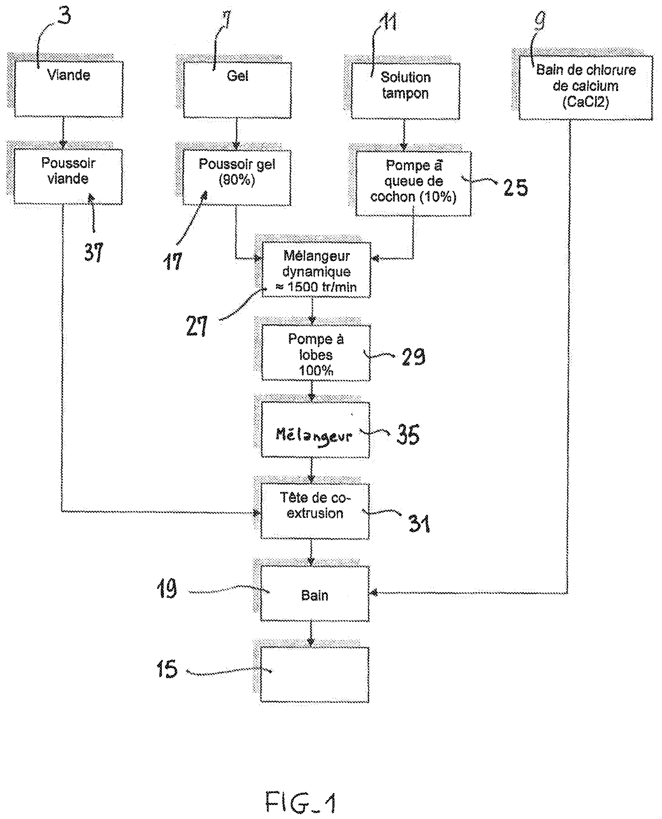

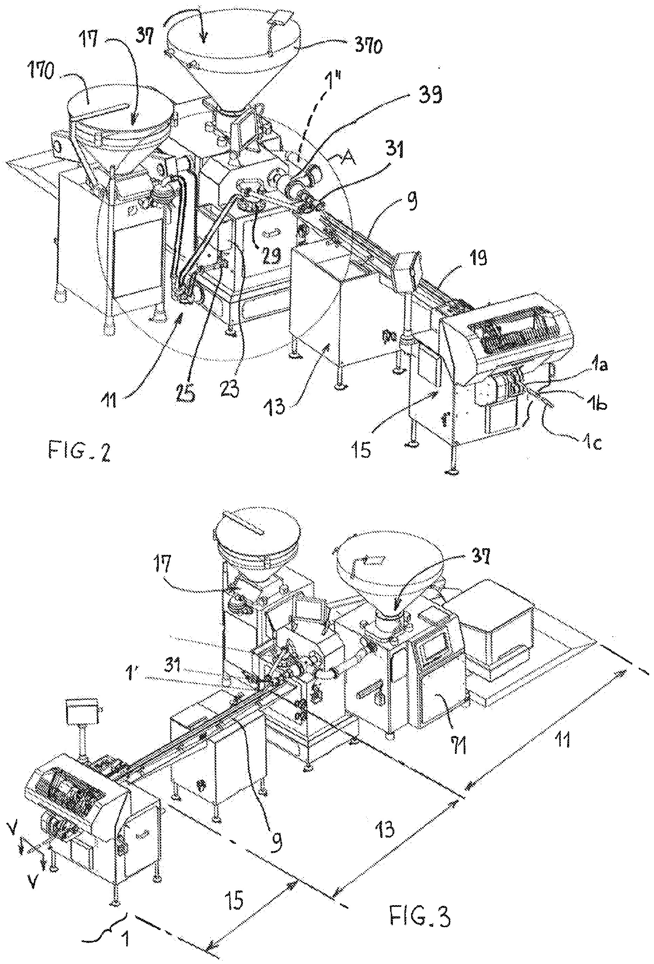

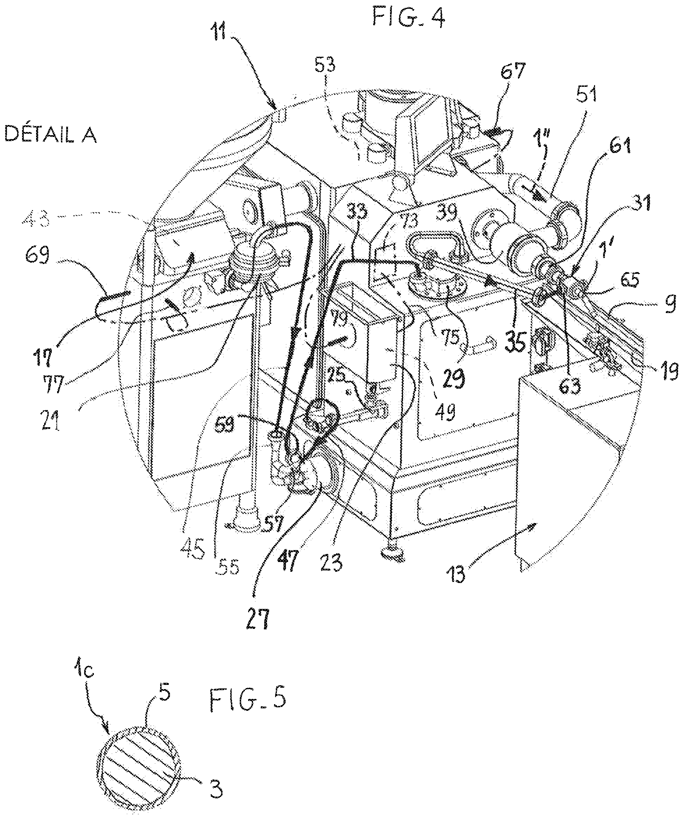

Dans le procédé de fabrication ou transformation de la figure 1, les matières suivantes sont utilisées, pour obtenir un produit alimentaire final 1, tel ici que des saucisses 1a,1b,1c... (voir figures 2,3) :
La viande 3 : elle peut-être comprendre ou être composée de boeuf, de porc, de mouton, de volaille, d'agneau.... Les recettes sont variées avec un pourcentage d'eau variable en fonction de la réglementation. Ces mêlées d'aliments peuvent comprendre divers conservateurs et/ou antioxydants. Il n'y a a priori pas (notablement) de solution tampon ni de gel (agent gélifiant) dans la mêlée. Leur mélange se trouve dans l'enveloppe extérieure 5 (figure 5) .

L'équilibre ionique de la mêlée contribue de façon importante à la présence et la résistance ou non de l'enveloppe 5 à la cuisson. Plus la préparation de produit alimentaire 3 sera riche en sodium (Na), ou potassium (K) ou magnésium (Mg) et plus la dégradation du gel sera rapide. C'est pourquoi un possible ajustement est jugé nécessaire. La présence d'une source de calcium trop importante dans la mêlée peut aussi provoquer des dommages lors de la cuisson, un excès de calcium rend l'enveloppe 5 trop rigide ce qui a pour conséquence l'apparition de fentes de l'enveloppe lors de la cuisson et un détachement de celle-ci, mais pas sa dégradation.

La tenue de l'enveloppe 5 à la cuisson est aussi liée à la rétention d'eau lors de cette cuisson. Il est possible d'utiliser des ingrédients rétenteurs d'eau comme les fibres ou amidons dans la mêlée pour améliorer la tenue de l'enveloppe à la cuisson.

Le gel (aussi appelé agent gélifiant) 7 : le gel est ici constitué d'alginate. L'alginate est constitué de deux type de monomères (G et M respectivement pour acide guluronique et acide mannuronique). Ces deux acides sont responsables de la formation de trois types de blocs (les blocs M, G et M-G). Suivant les espèces d'algues marines utilisées la proportion des blocs M et G varie. La qualité des alginates peut être mesurée en contrôlant certains paramètres tels que la viscosité, le pH, le degré Brix, la taille des particules, la texture, la microbiologie.

La solution de chlorure de calcium 9 : cette solution (CaCl2) permet la réaction de gélification de l'alginate. La concentration de la solution de chlorure de calcium permettant la gélification des alginates doit être mesurée régulièrement lors de la production. La gélification des alginates appauvri celle-ci en ions calcium et une réduction trop importante de calcium fragiliserait l'enveloppe 5.

La solution Tampon 11 : la solution tampon est ici composée d'acide citrique monohydraté et de citrate de sodium. Ces deux composés se trouvent sous la forme de poudre. Pour la réaliser, il est nécessaire de dissoudre ces deux poudres dans de l'eau, en fonction de coefficient de solubilité de ces deux composés.

Lors de tests, il a été utilisé une solution tampon à pH de 3,5 et ayant une concentration de 250 mM. Les proportions ont été les suivantes :
- Acide citrique : 39 gr/L (kg) de gel total,
- Citrate de sodium : 20 gr/L (kg) de gel total.

Un but visé est donc ici de fabriquer des saucisse 1a,1b... avec une enveloppe 5 végétale additionnée d'un acide contenu dans la solution tampon, en mélange.

En raison des conditions acides de la solution tampon 11 contenu dans le gel 7, une adhésion de la viande au gel par l'intermédiaire d'une liaison hydrogène intermoléculaire est obtenue. Cette caractéristique permet d'obtenir des produits stables dans le temps, avec une bonne texture globale et une amélioration significative lors de la cuisson des produits 1, leur enveloppe 5 suivant la rétraction du produit après cuisson.

La mise en œuvre du procédé selon la figure 1 est la suivante, en référence aux figures 2-4 qui montrent donc une machine 13 d'alimentation, avec le produit alimentaire 1' (produit 1 à enveloppe 5 non encore gélifiée/durcie autour de la mêlée 3 et ici non encore portionné dans la machine 13), du dispositif ou machine 13 de mise en contact de ce produit alimentaire avec un produit de coagulation 9, dans le bain de trempage 19.

Le gel 7 à base d'alginate est placé dans un poussoir 17, via la trémie 170 ; le gel 7 passe un filtre 21 d'environ 150-250 microns, pour chasser les bulles d'air et retenir les grosses particules pouvant altérer la co-extrusion.

La solution tampon acide 11, liquide, stockée dans un bac 23 à coté, est entrainée par l'intermédiaire d'une pompe doseuse 25 (dite deuxième pompe) qui dose ou régule la proportion entre le gel 7 et la solution tampon liquide 11 ; à ce sujet, on prévoit une proportion en débit d'environ 90 % de gel 7 pour 10 % de solution tampon liquide 11 ; la pompe 25 est ici une pompe à queue de cochon.

Les deux produits gel visqueux/solution tampon liquide sont alors mélangés, ici donc en aval de la pompe 25, par l'intermédiaire d'un mélangeur 27, qui est de préférence un mélangeur dynamique, de manière à obtenir un gel homogène.

On peut alors obtenir 100% de gel mélangé avec la solution tampon liquide. Le tout arrive dans une pompe doseuse 29 (dite première pompe) située entre le mélangeur 27 et la co-extrudeuse (ou tête de co-extrusion). La pompe doseuse permet de doser ou réguler la proportion entre la denrée alimentaire 1" (produit 1' avant co-extrusion) et le mélange d'agent gélifiant et de solution tampon acide issu du mélangeur 27. Figure 4, ce mélange circule dans la conduite d'alimentation 33. La pompe doseuse 29 est ici une pompe à lobes. Elle régule donc le débit de mélange de gel et de solution tampon. Ce mélange traverse alors de préférence un mélangeur statique 35 pour finaliser le mélange et s'assurer que celui ci est total.
La denrée alimentaire 1'', ici une mêlée de viande, stockée dans le poussoir 37 via la trémie 370, est acheminée jusqu'au broyeur 39. Ce broyeur comprend ici une grille de pré-coupe, des couteaux et une grille de broyeur de diamètre variable selon le grain de viande désiré. La viande arrive ensuite dans la buse de co-extrusion 31, avec le mélange gel et solution tampon. La buse de co-extrusion 31 comprend favorablement une canule d'expansion de manière à orienter les fibres de la viande dans le sens vertical dans le but de limiter la réduction en longueur après cuisson.

La viande et le gel mélangé (gel + solution tampon acide) disposée autour se retrouvent donc en contact dans cette buse de co-extusion 31.

La règle de proportion entre le gel mélangé et la mêlée de viande dépend de la réglementation en vigueur dans chaque pays. Le toron de chair 3 entouré de l'enveloppe (non encore gélifiée), qui peut être végétale, est alors mis en contact avec la solution 9 de chlorure de calcium, dans le bain 19, pour réaliser la gélification.

Pour cela on peut favorablement prévoir de réaliser un écoulement de la solution 9 en sortie de la buse de co-extrusion 31 et laisser le toron de chair 1'/3 immergé dans la solution de chlorure de calcium, pendant quelques secondes. Se forme alors l'enveloppe formant la peau durcie ou raidie 5. Le dispositif 13, à bain 19, assure ainsi la mise en contact du produit alimentaire sorti de la machine 11 avec la solution 9 de coagulation.

En sortie de ce dispositif 13, le toron de chair enveloppé de sa peau ou de son « boyau » gélifié (e) peut alors, notamment dans le cas de saucisses, être mis en portions longitudinales 1a,1b... par le dispositif 15 de mise en portions.

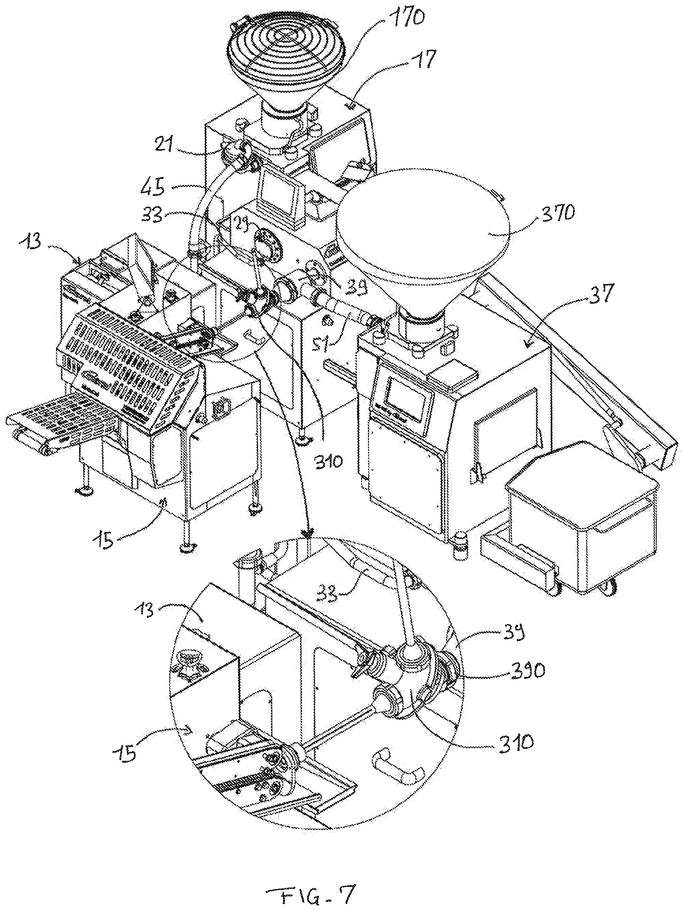

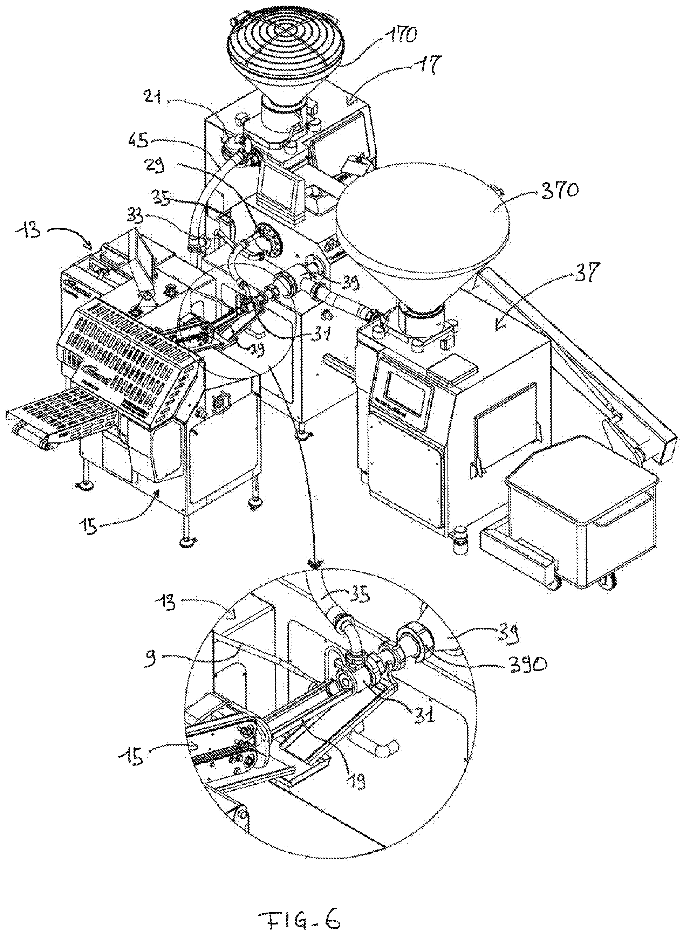

En référence aux figures 6 et 7, nous allons maintenant décrire une variante de réalisation d'une ligne de fabrication mettant en œuvre l'invention. Les éléments communs avec la ligne de fabrication illustrée aux figures 2 à 4 portent les mêmes références. Comme cela est visible dans les deux figures 6 et 7, l'agencement de la ligne de fabrication est compact. En effet, lors de la mise en œuvre d'une ligne de fabrication illustrée aux figures 2 à 4, il a été découvert que, durant l'étape où le toron de chair 1'/3 est immergé dans la solution de chlorure de calcium 9 pour former par gélification l'enveloppe formant la peau durcie ou raidie 5, il suffisait d'un temps d'immersion dans la solution 9 très court. De ce fait, le bain 19 du dispositif 13 peut présenter une longueur très courte. Cette longueur peut être comprise environ entre 10 cm et 30 cm, en particulier de l'ordre d'une vingtaine de centimètre. A titre de comparaison, dans la ligne de fabrication illustrée aux figures 2 et 3, une longueur du bain 19 est de l'ordre de 2 m.

Cette courte longueur du bain 19 a pour conséquence de pouvoir agencer les différentes machines 11,13,15,17 formant la ligne de fabrication de manière compacte et ainsi de gagner en surface d'occupation de ladite ligne de fabrication. Il est alors possible de disposer d'un plus grand nombre de lignes de fabrication pour un site de production donné.

Cette compacité d'agencement de la ligne de fabrication permet de rapprocher le dispositif de mise en portion 15 de la sortie 390 du broyeur 39. Par conséquent, il est alors possible, sans modifier cet agencement, de passer à la fabrication d'un produit alimentaire en mettant en œuvre l'invention qui vient d'être décrite (via l'agencement de la ligne de fabrication illustrée à la figure 6) à une fabrication conventionnelle et connue d'un produit alimentaire similaire. Le changement consiste alors à retirer le bain 19 et la tête de co-extrusion 31 montée sur la sortie 390 du broyeur 39, et à monter, à la place par permutation, une tête d'extrusion conventionnelle 310 comme illustré en figure 7. Dans le cas où le produit alimentaire est de la saucisse, la tête d'extrusion conventionnelle 310 permet réaliser des saucisses en boyaux de porc ou de mouton par exemple, et ce, sans modifier l'agencement de la ligne de fabrication.

Ainsi, il est obtenu une ligne de fabrication polyvalente et facilement adaptable à la demande de production. Ceci évite la mise en place de deux lignes de fabrication distinctes, une pour mettre en œuvre l'invention et illustrée à la figure 3 et une pour mettre en œuvre une fabrication conventionnelle et connue.

Dans la description ci-avant, on aura compris qu'on trouve donc, dans la machine 11 :
- une première alimentation en agent gélifiant 45 reliée à une source d'agent gélifiant 43,
- une deuxième alimentation en solution tampon acide 47 reliée à une source de solution tampon acide 49,
- une troisième alimentation en denrée alimentaire 51 reliée à une source de denrée alimentaire 53,
- un mélangeur 27 comprenant :
   * une première entrée 55 raccordée à la première alimentation en agent gélifiant 45,
   * une seconde entrée 57 raccordée à la deuxième alimentation en solution tampon acide 47,
   * et une sortie 59 d'agent gélifiant et de solution tampon acide mélangés,
- une co-extrudeuse ou tête de co-extrusion, 31 dont une première entrée 61 est raccordée à la troisième alimentation en denrée alimentaire 51 et une seconde entrée 63 est raccordée à la sortie 59 d'agent gélifiant et de solution tampon acide mélangés, pour extruder au centre la denrée alimentaire et en périphérie le mélange d'agent gélifiant et de solution tampon acide, de façon à obtenir en sortie 65 de la co-extrudeuse ledit produit alimentaire.

On notera encore que la machine 11 comprendra encore favorablement des moyens de mesure 67,69, pour mesurer de façon automatisée des propriétés électriques et/ou une résistance mécanique de la denrée alimentaire et/ou de l'agent gélifiant, par l'intermédiaire d'une unité de traitement/calcul 71.

Pourra également être favorablement prévu une unité de contrôle intelligente 73 pour ajuster de façon automatisée la résistance ionique de la solution tampon acide, via la ligne 75 qui débouche dans le réservoir 23.

On conseille aussi l'utilisation de moyens 77,79 de mesure pour mesurer de façon automatisée les viscosités de l'agent gélifiant et de la solution tampon acide.

## Revendications

1. Machine d'alimentation en un produit alimentaire d'un dispositif de mise en contact de ce produit alimentaire avec un produit de coagulation pour envelopper ledit produit d'un matériau durci formant peau, la machine étant **caractérisée en ce qu'**elle comprend :
- une première alimentation en agent gélifiant (45) reliée à une source d'agent gélifiant (43),
- une deuxième alimentation en solution tampon acide (47) reliée à une source de solution tampon acide (49),
- une troisième alimentation en denrée alimentaire (51) reliée à une source de denrée alimentaire (53),
- un mélangeur (27) comprenant :
* une première entrée (55) raccordée à la première alimentation en agent gélifiant,
* une seconde entrée (57) raccordée à la deuxième alimentation en solution tampon acide,
* et une sortie (59) d'agent gélifiant et de solution tampon acide mélangés,
- une co-extrudeuse (31) dont une première entrée (61) est raccordée à la troisième alimentation en denrée alimentaire (51) et une seconde entrée (63) est raccordée à la sortie d'agent gélifiant et de solution tampon acide mélangés (59), pour extruder au centre la denrée alimentaire et en périphérie le mélange d'agent gélifiant et de solution tampon acide, de façon à obtenir en sortie de la co-extrudeuse ledit produit alimentaire.

2. Machine selon la revendication 1, où la troisième alimentation en denrée alimentaire (51) alimente la première entrée (61) de la co-extrudeuse avec des morceaux de denrée alimentaire broyée.

3. Machine selon l'une des revendications précédentes, où l'agent gélifiant de la première alimentation (45) comprend des polysaccharides et/ou au moins une protéine.

4. Machine selon l'une des revendications précédentes, où la solution tampon acide (47) présente un pH d'environ 3.0 à 6.0, préférentiellement environ 3.1 à 4.5.

5. Machine selon l'une des revendications précédentes, où la solution tampon acide (47) présente une concentration totale en agent gélifiant (45) d'environ 50 à 500mM, préférentiellement environ 100 à 400 mM.

6. Machine selon l'une des revendications précédentes, où la solution tampon acide (47) est formulée en un gel ou une pâte comprenant un agent épaississant.

7. Machine selon l'une des revendications précédentes, où le mélangeur (27) comprend un mélangeur dynamique.

8. Machine selon l'une des revendications précédentes, qui comprend en outre une première pompe doseuse (29) située entre le mélangeur (27) et la co-extrudeuse (31) et qui régule la proportion entre la denrée alimentaire et le mélange d'agent gélifiant et de solution tampon acide.

9. Machine selon la revendication précédente, qui comprend un mélangeur statique (35) entre la première pompe doseuse et la co-extrudeuse, pour conforter le mélange entre l'agent gélifiant et la solution tampon acide.

10. Machine selon l'une des revendications précédentes, où un broyeur (39) est disposé entre la troisième alimentation en denrée alimentaire et la première entrée de la co-extrudeuse.

11. Machine selon la revendication 8, qui comprend en outre une deuxième pompe doseuse (25) en amont du mélangeur (27), pour réguler la proportion entre l'agent gélifiant et la solution tampon acide.

12. Machine selon l'une des revendications précédentes, qui comprend des moyens de mesure (67,69) pour mesurer de façon automatisée des propriétés électriques et/ou une résistance mécanique de la denrée alimentaire et/ou de l'agent gélifiant.

13. Machine selon l'une des revendications précédentes, qui comprend une unité de contrôle intelligente (73) pour ajuster de façon automatisée la résistance ionique de la solution tampon acide.

14. Machine selon l'une des revendications précédentes, qui comprend en outre un premier poussoir (37) à denrée alimentaire et un deuxième poussoir (17) à agent gélifiant.

15. Machine selon l'une des revendications précédentes, qui comprend en outre des moyens de mesure (77,79) pour mesurer de façon automatisée les viscosités de l'agent gélifiant et de la solution tampon acide.

16. Ligne de fabrication en continu de produits alimentaires longs, flexibles et susceptibles de se courber naturellement, comprenant :
- la machine d'alimentation (11) selon l'une des revendications précédentes,
- le dispositif (13) de mise en contact avec une solution de coagulation du produit alimentaire issu de ladite machine d'alimentation, pour obtenir un produit alimentaire pourvu d'une enveloppe en matériau durci formant peau, et
- un dispositif (15) de mise en portions longitudinales du produit alimentaire (3) pourvu de l'enveloppe (5).

17. Ligne de fabrication selon la revendication 16, dans laquelle le dispositif (13) de mise en contact avec une solution de coagulation comporte des moyens de mise en contact (19) de courte longueur, environ entre 10 cm et 30 cm.

18. Ligne de fabrication selon la revendication 17, dans laquelle la co-extrudeuse (31) est permutable avec d'autres moyens d'extrusion (310) sans modification d'un agencement de la ligne de fabrication, rendant celle-ci polyvalente.

## Patentansprüche

1. Maschine zum Beschicken, mit einem Lebensmittelprodukt, einer Vorrichtung zum Kontaktieren dieses Lebensmittelprodukts mit einem Koagulationsprodukt, um das Produkt mit einem gehärteten Material zu umhüllen, das eine Haut bildet, wobei die Maschine **dadurch gekennzeichnet ist, dass** sie umfasst:
- eine erste Beschickung mit Geliermittel (45), die mit einer Geliermittelquelle (43) verbunden ist,
- eine zweite Beschickung mit saurer Pufferlösung (47), die mit einer Quelle saurer Pufferlösung (49) verbunden ist,
- eine dritte Beschickung mit Lebensmittel (51), die mit einer Lebensmittelquelle (53) verbunden ist,
- einen Mischer (27), der umfasst:
-- einen ersten Einlass (55), der mit der ersten Geliermittelbeschickung verbunden ist,
-- einen zweiten Einlass (57), der mit der zweiten Beschickung mit saurer Pufferlösung verbunden ist,
-- und einen Auslass (59) für gemischtes Geliermittel und saure Pufferlösung,
- einen Koextruder (31), von dem ein erster Einlass (61) mit der dritten Lebensmittelbeschickung (51) verbunden ist, und ein zweiter Einlass (63) mit dem Auslass für gemischtes Geliermittel und saure Pufferlösung (59) verbunden ist, um in der Mitte das Lebensmittel und am Umfang die Mischung aus Geliermittel und saurer Pufferlösung zu extrudieren, sodass am Auslass des Koextruders das Lebensmittelprodukt erhalten wird.

2. Maschine nach Anspruch 1, wobei die dritte Lebensmittelbeschickung (51) den ersten Einlass (61) des Koextruders mit Stücken zerkleinerten Lebensmittels beschickt.

3. Maschine nach einem der vorstehenden Ansprüche, wobei das Geliermittel der ersten Beschickung (45) Polysaccharide und/oder mindestens ein Protein umfasst.

4. Maschine nach einem der vorstehenden Ansprüche, wobei die saure Pufferlösung (47) einen pH-Wert von etwa 3,0 bis 6,0, vorzugsweise etwa 3,1 bis 4,5 aufweist.

5. Maschine nach einem der vorstehenden Ansprüche, wobei die saure Pufferlösung (47) eine Gesamtkonzentration an Geliermittel (45) von etwa 50 bis 500 mM, vorzugsweise etwa 100 bis 400 mM aufweist.

6. Maschine nach einem der vorstehenden Ansprüche, wobei die saure Pufferlösung (47) als ein Gel oder eine Paste formuliert ist, die ein Verdickungsmittel umfasst.

7. Maschine nach einem der vorstehenden Ansprüche, wobei der Mischer (27) einen dynamischen Mischer umfasst.

8. Maschine nach einem der vorstehenden Ansprüche, die weiter eine erste Dosierpumpe (29) umfasst, die sich zwischen dem Mischer (27) und dem Koextruder (31) befindet und die das Verhältnis zwischen dem Lebensmittel und der Mischung aus Geliermittel und saurer Pufferlösung regelt.

9. Maschine nach dem vorstehenden Anspruch, die einen statischen Mischer (35) zwischen der ersten Dosierpumpe und dem Koextruder umfasst, um die Mischung zwischen dem Geliermittel und der sauren Pufferlösung zu festigen.

10. Maschine nach einem der vorstehenden Ansprüche, wobei ein Zerkleinerer (39) zwischen der dritten Lebensmittelbeschickung und dem ersten Einlass des Koextruders angeordnet ist.

11. Maschine nach Anspruch 8, die weiter eine zweite Dosierpumpe (25) stromaufwärts des Mischers (27) umfasst, um das Verhältnis zwischen dem Geliermittel und der sauren Pufferlösung zu regeln.

12. Maschine nach einem der vorstehenden Ansprüche, die Messmittel (67, 69) umfasst, um elektrische Eigenschaften und/oder einen mechanischen Widerstand des Lebensmittels und/oder des Geliermittels automatisiert zu messen.

13. Maschine nach einem der vorstehenden Ansprüche, die eine intelligente Steuereinheit (73) umfasst, um den ionischen Widerstand der sauren Pufferlösung automatisiert anzupassen.

14. Maschine nach einem der vorstehenden Ansprüche, die weiter einen ersten Schieber (37) für Lebensmittel und einen zweiten Schieber (17) für Geliermittel umfasst.

15. Maschine nach einem der vorstehenden Ansprüche, die weiter Messmittel (77, 79) umfasst, um die Viskositäten des Geliermittels und der sauren Pufferlösung automatisiert zu messen.

16. Kontinuierliche Produktionslinie für lange, flexible und sich natürlicher biegen könnende Lebensmittel, umfassend:
- die Beschickungsmaschine (11) nach einem der vorstehenden Ansprüche,
- die Vorrichtung (13) zum Kontaktieren des aus der Beschickungsmaschine stammenden Lebensmittelprodukts mit einer Koagulationslösung, um ein Lebensmittelprodukt zu erhalten, das mit einer Hülle aus gehärtetem Material versehen ist, das eine Haut bildet, und
- eine Vorrichtung (15) zum Längsportionieren des mit der Hülle (5) versehenen Lebensmittelprodukts (3).

17. Produktionslinie nach Anspruch 16, wobei die Vorrichtung (13) zum Kontaktieren mit einer Koagulationslösung Kontaktiermittel (19) von kurzer Länge, etwa zwischen 10 cm und 30 cm, umfasst.

18. Produktionslinie nach Anspruch 17, wobei der Koextruder (31) ohne Modifikation einer Anordnung der Produktionslinie mit anderen Extrusionsmitteln (310) permutierbar ist, was diese vielseitig werden lässt.

## Claims

1. A machine for supplying food product to a device for putting said food product in contact with a coagulation product for coating said food product with a hardened material forming a skin, the machine being **characterized in that** it comprises:
- a first gelling agent supply (45) connected to a source of gelling agent (43),
- a second acidic buffer solution supply (47) connected to a source of acidic buffer solution (49),
- a third food supply (51) connected to a source of food (53),
- a mixer (27) comprising:
- a first inlet (55) connected to the first gelling agent supply (45),
- a second inlet (57) connected to the second acidic buffer solution supply, and
- an outlet (59) for mixed acidic buffer solution and gelling agent,
- a co-extruder (31) a first inlet (61) of which is connected to the third food supply (51) and a second inlet (63) of which is connected to the outlet (59) for mixed acidic buffer solution and gelling agent, for extruding the food product at the centre and the mixture of acidic buffer solution and gelling agent at the periphery, so as to obtain said food product at the outlet of co-extruder.

2. Machine according to claim 1, wherein the third food product supply (51) feeds the first inlet (61) of the co-extruder (31) with pieces of ground food.

3. Machine according to one of the previous claims, wherein the gelling agent of the first supply (45) comprises polysaccharides and/or at least one protein.

4. Machine according to one of the previous claims, wherein the acidic buffer solution (47) has a pH of about 3.0 to 6.0, preferably about 3.1 to 4.5.

5. Machine according to one of the previous claims, wherein the acidic buffer solution (47) has a total concentration of gelling agent (45) of about 50 to 500 mM, preferably about 100 to 400 mM.

6. Machine according to one of the previous claims, wherein the acidic buffer solution (47) is formulated as a gel or paste comprising a thickening agent.

7. Machine according to one of the previous claims, wherein the mixer (27) comprises a dynamic mixer.

8. Machine according to one of the previous claims which further comprises a first dosing pump (29) disposed between the mixer (27) and the co-extruder (31) and which regulates the proportion between the food and the mixture of acidic buffer solution and gelling agent.

9. Machine according to the previous claim, which comprises a static mixer (35) between the first dosing pump and the co-extruder, for consolidating the mixing between the acidic buffer solution and the gelling agent.

10. Machine according to one of the previous claims, wherein a grinder (39) is disposed between the third food supply and the first inlet of the co-extruder.

11. Machine according to claim 8, which further comprises a second dosing pump (25) upstream the mixer (27), for regulating the proportion between the acidic buffer solution and the gelling agent.

12. Machine according to one of the previous claims, which comprises first measuring means (67, 69) for automatically measuring electrical proprieties and/or a mechanical strength of the food and/or of the gelling agent.

13. Machine according to one of the previous claims which comprises an intelligent control unit (73) for automatically adjusting the ionic resistance of the acidic buffer solution.

14. Machine according to one of the previous claims, which further comprises a first food pusher (37) and a second gelling agent pusher (17).

15. Machine according to one of the previous claims, which further comprises measuring means (77, 79) for automatically measuring the viscosities of the acidic buffer solution and the gelling agent.

16. A line for the continuous manufacture of long flexible food products able to curve naturally, comprising:
- the feeding machine (11) according to one of the previous claims,
- the device (13) for putting the food product issuing from said feeding machine in contact with a coagulation solution, to obtain a food product provided with a coating of hardened material forming a skin, and
- a device (15) for putting in longitudinal portions the food product (3) provided with the coating (5) .

17. Manufacturing line according to claim 16, wherein the device (13) for putting in contact with a coagulation solution comprises means for putting in contact (19) that are short, approximately between 10 cm and 30 cm.

18. Manufacturing line according to claim 17, wherein the co-extruder (31) can be switched with other extrusion means (310) without modification to an arrangement of the manufacturing line, making the latter versatile.
